# EUROPEAN PATENT SPECIFICATION

(11) **EP 1 620 535 B1**
(45) Date of publication and mention of the grant of the patent: **09.12.2009**
(21) Application number: 04731260.8
(22) Date of filing: 05.05.2004
(51) Int. Cl.: C12G 1/00, A23L 1/00, A23P 1/02

(54) **MIXTURE FOR OENOLOGICAL USE OF THE TYPE COMPRISING TANNIN AND METHOD FOR THE MANUFACTURE THEREOF**
MISCHUNG DES TANNINHALTIGEN TYPS FÜR ÖNOLOGISCHE ZWECKE UND VERFAHREN ZU DESSEN HERSTELLUNG
MELANGE A USAGE OENOLOGIQUE DE TYPE QUI COMPREND DU TANIN ET PROCEDE DE FABRICATION CORRESPONDANT

(30) Priority: 08.05.2003 IT PD20030097
(43) Date of publication of application: 01.02.2006
(73) Proprietor: Enologica Vason S.r.l., 37020 Pedemonte di San Pietro in Cariano (IT)
(72) Inventor: VASON, Albano, I-37029 San Pietro In Cariano (IT)
(74) Representative: Gallo, Luca
(86) International application number: PCT/IT2004/000245
(87) International publication number: WO 2004/099361

(56) References cited:
- EP-A- 1 245 613
- FR-A- 2 495 116
- FR-A- 2 526 039
- US-A- 3 700 461
- US-A- 3 715 216
- US-A- 4 156 024
- US-A- 4 999 197
- PATENT ABSTRACTS OF JAPAN vol. 0110, no. 24 (C-399), 23 January 1987 (1987-01-23) & JP 61 195683 A (ICHIRO KATADA), 29 August 1986 (1986-08-29)

## Description

The present invention concerns a mixture for oenological use of the type comprising tannin and a process vinification using said mixture.

The mixture in question is intended to be used by the food industry and in particular by the wine industry in vinification processes.

The basic component of this mixture - tannin - is fundamental in vinification processes. Tannins nowadays are in fact widely used in wine production and are suitable chosen in order to influence in a specific manner the properties of the wine. As is known, tannins are phenolic compounds (aromatic alcohols) with very complex structures and molecular weights ranging between 500 and 3000. It is widely known that they are able to influence in a significant manner (during vinification of white, red, rosé or sparkling wine) the formation of polyphenols contained in the wine, which are one of the main components responsible for its organoleptic properties and its colour, its stability, its structure and, in particular, its taste.

In reality, the term "tannin" is commonly used to indicate several classes of compounds which, although they may all be usefully used in vinification processes, have only very few properties in common.

In very broad terms tannins are generally classified as hydrolysable tannins and condensed tannins. The former, which are present in plant species, are in turn divided into gallo-tannins which are particularly pure and contained in the undifferentiated tissues (galls) of plant species such as the oak, chestnut or tara, and into ellagi-tannins, which consist of the tannins released by the wood of barrels and whose use in wine has been well-known for a long time.

The latter, i.e. so-called condensed tannins, are those which are extracted from skins, grape stalks and grape pips and are in turn divided into procyanidin and prodelphinidin.

The individual classes of tannins and the individual various types of tannin, which differ from each other particularly in terms of their origin, are chosen for specific applications.

Hereinbelow we shall describe, purely by way of example, some effects due to the use of tannins, this with the sole aim of documenting the wide use which is made of these substances in vinification processes.

Tannins may be used during the various stages of the vinification processes, in particular for aromatic refining, stabilisation of the colour extracted during maceration (for example in order to accentuate specific hues and prevent the evolution towards other hues) and improvement of the structure and the body. They are also used for the purposes of clarification and for increasing the intensity of aromas (in particular, for example, nuances of forest fruit aromas), for increasing the complexity of the bouquet, for capturing free radicals, for regulating the redox potential and for protecting polyphenols from oxidation. In an effective manner they are also used for reactions with thiols having unpleasant odours (elimination of mustiness), for reactions with anthocyans (in particular creating stable coloured compounds), for preventing enzymatic and chemical oxidation, for improving the structure without causing astringency, for precipitating proteins and preventing the action of laccase, for increasing the tannin structure and for reducing the aggressiveness of alcohol.

Obviously each specific vinification operation for white or red wine will usually involve during programmed stages of the process (pressing, maceration, fermentation, racking, storage, refining, clarification, filtration, stabilization, bottling) the use of one or more different classes and types of tannin.

The choice of tannin to be used may be determined by means of a prior examination, to be carried out during tasting of wine samples treated with tannins of varying origin and left to settle for a short period of time. In this way it is possible to obtain a realistic idea as to the final effect of the tannin combined with the polyphenols present in the treated wine.

At present, most of the tannins available on the market are in the form of powder which is packaged in special containers or bags.

At the time of use, the tannin powder is firstly removed from the bag and the required quantity thereof then weighed (usually about 3-30 g/hl). The said quantity is then diluted in a liquid fraction of wine, or water, so as to allow dissolving thereof. Finally the liquid fraction with the dissolved tannin powder is added to and mixed with the wine.

As is known, tannin in powder form gives rise to a few problems of a practical nature during use.

A first drawback arises from the fact that, when dissolved in the liquid fraction, tannin in powder form tends to form numerous lumps which must be dissolved before mixing the solution with the wine to be treated.

A further drawback arises from the fact that, since tanning powder is particularly fine, the particles tend to fly away and be dispersed in the atmosphere during handling (removal from the bag and weighing of the metered amounts) with wastage of product and risk of contaminating the operating personnel.

In order to overcome this problem, tannin products already dissolved on a liquid base in concentrated form, to be mixed directly with the wine or diluted before use, are available on the market. This solution obviously has the drawback that it results in a considerable volume and weight compared to the equivalent amount of tannin in powder form.

Document EP1245613 discloses a method for obtaining tannin by extracting plant resources with mangrove, acacia, pine, eucalyptus, oak, hemlock and the like with lower alcohol or lower alcohol/water, or extracting outer bark of radiata pine (Pinus radiata) with water, lower alcohol or lower alcohol/water, and an adhesive containing said extracted substance for adhering woody materials such as veneer.

Document FR 2526039 teaches to introduce in the bottles for a vinification process with the method "Champenoise" the required products all together by means of an agglomerated powder.

In the food industry it is well-known to reduce powders such as cocoa, coffee and the like into agglomerated powders - granules - in order to obtain preparations which are instantaneously dissolvable in water, milk or the like. The same requirement is also widespread in the pharmaceutical industry where numerous granulation methods have been developed.

For instance, document US 3,700,461 discloses a method of agglomeration of dry food particles as sugar, tannin powder, wheat flour, soup powder etc., into larger size particles so that the particles may more readily be dispersed in a liquid such as water or milk.

Document FR 2495116 discloses a method to introduce must treatment products during the vinification process. According to the invention therein described, the products can be compacted together with a binder to make a tablet or put in the form of powder, crystals or grains in a fine mesh bag. The products are then solubilised in the must by leaching in a controlled dilution process, making the must flow through a filter where the tablet, or the bag, is placed.

Document US 3715216 is concerned with the production of powdered compositions adapted to be reconstituted in cold water to provide refreshing beverages of which the flavor and appearance resemble fresh juices. The powdered compositions composition is in the form of free flowing, granular particles comprising sugar, an edible acid and flavoring, in which the particles are agglomerated together with a binder consisting essentially of an edible fat and an edible gum as gum Arabic.

The main granulation systems of the known type include those which use granulators of the type comprising rotating vanes, extrusion screws, fluid beds, dry systems, rotors, hammers (for mixtures which are not too wet) and blades.

The granulation processes generally involve several stages (metering, mixing, setting, granulation, drying) and are optimised for the individual products to be obtained. In most cases the conversion of the powder into granules is performed using binding substances such as starch, sugars, gelatins, etc. The need to employ binders depends on the type of process used and the powder which must be treated.

In this situation the problem underlying the present invention is therefore that of eliminating the drawbacks of tannins or generally of powder mixtures comprising tannins of the known type mentioned above, by providing a mixture for oenological use of the type comprising tannin, which can be used in a practical manner in vinification processes.

A further object of the present invention is that of producing a mixture for oenological use which provides tannin and other substances contained in the mixture in a form which can be easily dissolved and metered.

A further object of the present invention is that of providing a mixture for oenological use in a form such that it cannot be easily dispersed in the environment.

A further object of the present invention is that of providing a process of vinification using tannin in a form which can be used in a practical manner.

These and other objects are all achieved by the mixture for oenological use and by the process of vinification as indicated above, the technical features of which may be clearly determined from the contents of the claims indicated below, and the advantages of the said invention will emerge more clearly from the detailed description which follows, with reference to a purely exemplary and non-limiting embodiment.

The mixture for oenological use according to the present invention comprises particles of tannin powder and particles of a binding substance agglomerated together and is **characterized in that** the binding substance is gum Arabic powder. Said mixture is in the form of granules having a porosity able to convey inside each granule a dissolving wine, for producing instantaneous and complete dissolution of the granules in said dissolving wine, the granules substantially exploding as they rapidly dissolve in the dissolving wine, assisted by the hydrostatic pressure of the wine.

At the time of immersion the liquid penetrates inside the individual granules by means of capillarity through the internal channels of the granules, resulting in the "explosion" and the instantaneous and complete dissolution of the product in the dissolving liquid. The granule dissolution process is assisted by the hydrostatic pressure which gradually forms as the heavy granule reaches the bottom of the container for preparation of the solution.

According to the present invention, the possibility of complete dissolution of the tannin and Arabic gum results in many advantages.

Avoiding in fact the formation of lumps or concentrations of product in the dissolving liquid results firstly in considerable simplification and speeding-up of the operations for preparing the tannin solution. The dissolution time is drastically reduced and mixing systems, which may also be very costly, are eliminated.

Secondarily the losses of material caused by depositions and encrustations on the walls and on the bottom of containers used for dissolving the product are substantially reduced.

A further advantage also consists in the fact that the operations for cleaning these containers are less frequent and less complex.

The composition of the mixture according to the invention envisages, as its basic component, tannin and gum Arabic for oenological use.

Advantageously, in a preferred embodiment, the gum Arabic for oenological use is added to the tannin, in a percentage amount by weight varying from 20 to 60%. The percentage of gum Arabic is determined with respect to the percentage of tannin, depending on the type of wine to be treated with the mixture in question, the oenological treatment envisaged with the said mixture and the operative requirements of the end user.

As is known, in fact, gum Arabic, because of its colloidal action, is traditionally used as a stabiliser both in red wines and in white wines to avoid undesirable flocculation or depositions or to avoid cloudiness due, for example, to "copper casse" or to "white casse" or to similar phenomena which frequently appear in wines after exposure to low temperatures or after filtration of mature wines.

Other effects attributable to the use of gum Arabic in wine making, and more or less able to be found in all types of wine enriched with this substance, are an increase in the aromatic fragrance, a greater softness of taste and more prolonged "perlage" in sparkling wines. Moreover, especially in red wines, a marked stabilization of the colour is noticeable owing to a reduction in the precipitation of colouring substances which remain in colloidal form.

The association of tannin and gum Arabic in a mixture according to the invention therefore results in a product for oenological use which is very versatile and which may allow simplification and optimization of the wine treatment processes, simultaneous dosage of the two substances being possible.

Advantageously, the presence of gum Arabic favours significantly the granulation of the mixture, allowing the formation of granules which are mechanically stronger and less prone to pulverisation during transportation.

The claimed process of vinification requires a step of introducing the mixture into the wine. The above mentioned mixture is obtainable according with the method described in the following.

The method for producing a mixture for oenological use according to the invention is based on the use of components in powder form and envisages using an agglomeration chamber. Said components in powder form comprise:
- tannin in order to influence in a specific manner the properties of the wine during programmed stages of the
process;
- gum Arabic, because of its colloidal action, as a stabiliser to avoid undesirable flocculation or depositions or cloudiness or to increase in the aromatic fragrance, a greater softness of taste and more prolonged "perlage" in sparkling wines or to stabilize the colour owing to a reduction in the precipitation of colouring substances which remain in colloidal form.
The mixture is obtainable by the steps of:
- adding metered quantities of the components of the mixture in the form of particles of powder inside an agglomeration chamber;
- fluidizing the particles of powder inside the agglomeration chamber;
- moistening the particles of powder fluidized inside the agglomeration chamber by means of particle-like dispersion in a agglomeration fluid formed by aqueous solution and gum Arabic;
- agglomerating the particles of powder by means of the agglomeration fluid with consequent formation of granules;
- drying the granules by means of evaporation of the agglomeration fluid inside the agglomeration chamber;
- extracting the dried granules from the agglomeration chamber;
the granules producing instantaneous and complete dissolution of tannin and gum Arabic in the wine, and substantially exploding as they rapidly dissolve in the wine, assisted by the hydrostatic pressure of the wine.

Advantageously the method according to the invention may be performed in a fluid-bed granulator (not shown since of a type known per se). All the variants of the abovementioned granulator necessary for implementing said method are understood as being adequately described in the following description for a person skilled in this particular sector.

With this granulation system it is possible to obtain, in the case of this specific application, granules which are characterized by a low density ant therefore high porosity and in addition characterized by small dimensions - in the region of 0.1 to 0.5 µm to a maximum of 2-3 mm - without having to use spray granulators which may require more costly management. A high porosity favours rapid dissolution of the mixture in a manner similar to an "explosion", while small-size granules allow finer metering thereof in the dissolving liquid, also for carrying out laboratory tests or trials.

Mixing of the various powder components of the mixture in question comprising tannin powder and gum Arabic powder, may be performed prior to implementing the method or directly during the metering step.

The mass of powders added into the agglomeration chamber forms an uncompacted layer and fluidization of this mass may be performed using a blower with direct blowing-in of gaseous fluid underneath this layer.

If one wishes to avoid using a blower, fluidization of the powders may also be performed by means of a suction system connected to the top part of the agglomeration chamber.

With the suction system a continuous gaseous flow is created in any case and is forced inside the agglomeration chamber, passing through the mass of powders and causing fluidization thereof.

If the gaseous fluid is air, prior to filtering, it may be drawn from the external environment; in the where, however, it is preferred to use nitrogen it is drawn from the associated tank.

The gaseous fluid which emerges from the agglomeration chamber may be forced to pass through filtering systems, such as for example sleeve filters, so as to recover, and not disperse together with the gaseous fluid, the particles of powder which may be entrained.

As regards agglomeration of the powder particles, it is performed when the layer of powders is fluidized and therefore necessarily in conjunction with the fluidization step. Continuous moistening of the fluidized particles is performed by means of particle-like dispersion of an agglomeration fluid: during the turbulent fluidization movement the fluid droplets encapsulate various powder particles, creating a coagulated body which, for as long it is kept suspended in the fluidized mass by the gaseous fluid, captures other particles of powder by means of collision and increases in size.

The agglomeration fluid which can be used may be water or an aqueous solution containing dissolved binding substances. According to the present invention an aqueous solution of gum Arabic for oenological use is employed as agglomeration fluid, thus avoiding introducing into the mixture substances which may negatively alter the organoleptic properties of the wine.

The use of gum Arabic added to the water consents to obtain a particle size distribution of the granules which is close to the maximum size limit obtainable with a fluid-bed granulator.

The agglomeration fluid may be introduced and dispersed substantially inside the top part of the agglomeration chamber, by means of atomizers or sprayers which are arranged so as to be able to moisten in a uniform manner the fluidized mass of powders which, either by means of direct blowing-in from the bottom or suction from the top, occupies the whole of the agglomeration chamber with a turbulent movement.

Advantageously, before entering into the agglomeration chamber, the gaseous fluid is preheated to a temperature of between 150 and 210°C so as to be able to perform drying of the granules. As a result of the hot gaseous flow, in fact, it is possible to achieve evaporation of the agglomeration fluid and consequently the formation of channels inside the granules. These channels, left free by the fluid, form the internal porosity of the granules.

The method according to the present invention may advantageously be implemented in a continuous or discontinuous manner.

When implementing the method continuously, several agglomeration chambers connected in series may be envisaged. The powder components are continuously introduced into the chambers, while the dried granules are extracted either directly from the bottom of the individual chambers or from a chamber which is specially provided for this purpose and connected to the agglomeration chambers.

When implementing the method in a discontinuous manner, the powder components are added into the agglomeration chamber as a single charge and extraction of the dried granules is performed at the end of the process.

The invention thus conceived therefore achieves the predefined objects.

## Claims

1. Mixture for oenological use of the type comprising particles of tannin powder and particles of a binding substance agglomerated together **characterized in that** said binding substance is gum Arabic powder, said mixture being in the form of granules having a porosity able to convey inside each granule a dissolving wine, for producing instantaneous and complete dissolution of the granules in said dissolving wine, said granules substantially exploding as they rapidly dissolve in said dissolving wine, assisted by the hydrostatic pressure of said wine.

2. Mixture according to Claim 1, in which said gum Arabic is present in a percentage amount by weight in the range of 20% to 60%, said percentage amount being chosen depending on the type of wine to be treated with said mixture and the oenological treatments envisaged with said mixture.

3. Process of vinification which comprises a step of introducing the mixture of claim 1 or 2, said mixture being obtainable by the steps of:
- adding metered quantities of the components of said mixture in the form of particles of powder inside an agglomeration chamber;
- fluidizing said particles of powder inside said agglomeration chamber;
- moistening said particles of powder fluidized inside said agglomeration chamber by means of particle-like dispersion in a agglomeration fluid formed by aqueous solution and gum Arabic;
- agglomerating said particles of powder by means of said agglomeration fluid with consequent formation of granules;
- drying said granules by means of evaporation of said agglomeration fluid inside said agglomeration chamber;
- extracting said dried granules from said agglomeration chamber;
said granules producing instantaneous and complete dissolution of tannin and gum Arabic in said wine, and substantially exploding as they rapidly dissolve in said wine, assisted by the hydrostatic pressure of said wine.

4. Process according to Claim 3, **characterized in that**, during metering, said gum Arabic is added in a percentage amount by weight ranging from 20% to 60%, the residual fraction being composed substantially of tannin.

5. Process according to any one of Claims 3 or 4, **characterized in that** it is implemented using a fluid-bed granulator.

6. Process according to anyone of Claims 3 to 5, **characterized in that** said agglomeration step takes place during said fluidization step.

7. Process according to any one of Claims 3 to 6, **characterized in that** said agglomeration fluid is dispersed substantially in the top part of the agglomeration chamber.

8. Process according to any one of Claims 3 to 7, **characterized in that** drying of the granules is obtained by blowing in a gaseous fluid and provides the granules with an internal porosity.

9. Process according to Claim 8, **characterized in that** said gaseous fluid is air or nitrogen.

10. Process according to Claims 8 or 9, **characterized in that** blowing-in of said gaseous fluid occurs via the bottom of said agglomeration chamber.

11. Process according to any one of Claims 8 to 10, **characterized in that**, before entering said agglomeration chamber, the gaseous fluid is pre-heated to a temperature varying from 150 to 210°C.

12. Process according to any one of Claims 3 to 11, **characterized in that** it is continuous, the step of metering said powder being performed at the same time as extraction of the granules.

13. Process according to any one of Claims 3 to 11, **characterized in that** it is discontinuous, extraction of the granules being performed after the step of metering said powder.

## Patentansprüche

1. Gemisch für den önologischen Gebrauch, umfassend Tanninpulverpartikel und Partikel eines Bindemittels, die miteinander agglomeriert sind, **dadurch gekennzeichnet, dass** das Bindemittel Gummiarabikumpulver ist, wobei das Gemisch in der Form von Körnchen ist, die eine Porosität aufweisen, die fähig ist, in jedes Körnchen Lösungswein zu leiten, um eine augenblickliche und vollständige Auflösung der Körnchen in dem Lösungswein zu verursachen, wobei die Körnchen unterstützt durch den hydrostatischen Druck dieses Weins im Wesentlichen in einer schnellen Auflösung im Lösungswein explodieren.

2. Gemisch nach Anspruch 1, bei dem das Gummiarabikum mit einem Gewichtsprozentanteil im Bereich von 20% bis 60% vorhanden ist, wobei dieser Prozentanteil in Abhängigkeit vom Typ des mit dem Gemisch zu behandelnden Weins und den mit diesem Gemisch vorgesehenen önologischen Behandlungen gewählt wird.

3. Weinbereitungsverfahren, das eine Phase der Eingabe des Gemisches der Ansprüche 1 oder 2 umfasst, wobei dieses Gemisch mit Hilfe der folgenden Phasen erhalten werden kann:
- Hinzufügen dosierter Mengen der Bestandteile des Gemischs in Form von Pulverpartikeln in eine Agglomerationskammer;
- Fluidisierung der Pulverpartikel in der Agglomerationskammer;
- Befeuchtung der fluidisierten Pulverpartikel in der Agglomerationskammer mittels Dispersion der Partikel einer aus einer wässrigen Lösung und Gummiarabikum gebildeten Agglomerationsflüssigkeit;
- Agglomeration der Pulverpartikel mit Hilfe der Agglomerationsflüssigkeit mit sich hieraus ergebender Bildung von Körnchen;
- Trocknung der Körnchen durch Verdampfen der Agglomerationsflüssigkeit in der Agglomerationskammer;
- Extraktion der getrockneten Körnchen aus der Agglomerationskammer;
wobei die Körnchen eine augenblickliche und vollständige Auflösung des Tannins und des Gummiarabikums im Wein verursachen, und im Wesentlichen indem sie explodieren, da sie sich unterstützt durch den hydrostatischen Druck des Weins schnell in diesem Wein auflösen.

4. Verfahren nach Anspruch 3, **dadurch gekennzeichnet, dass** in der Dosierungsphase das Gummiarabikum mit einem Gewichtsprozentanteil von 20% bis 60% dosiert wird, wobei der restliche Anteil im Wesentlichen aus Tannin besteht.

5. Verfahren nach einem der Ansprüche 3 bis 4, **dadurch gekennzeichnet, dass** es mit Hilfe eines Fließbettgranulators realisiert wird.

6. Verfahren nach einem der Ansprüche 3 bis 5, **dadurch gekennzeichnet, dass** die Agglomerationsphase während der Fluidisierungsphase erfolgt.

7. Verfahren nach einem der Ansprüche 3 bis 6, **dadurch gekennzeichnet, dass** die Agglomerationsflüssigkeit im Wesentlichen im oberen Teil der Agglomerationskammer disperdiert wird.

8. Verfahren nach einem der Ansprüche 3 bis 7, **dadurch gekennzeichnet, dass** die Trocknung der Körnchen durch Einblasen eines gasförmigen Fluids erhalten wird und eine Porosität in den Körnchen verursacht.

9. Verfahren nach Anspruch 8, **dadurch gekennzeichnet, dass** das gasförmige Fluid Luft oder Stickstoff ist.

10. Verfahren nach Anspruch 8 oder 9, **dadurch gekennzeichnet, dass** das Einblasen des gasförmigen Fluids vom Boden der Agglomerationskammer aus erfolgt.

11. Verfahren nach einem der Ansprüche 8 bis 10, **dadurch gekennzeichnet, dass** das gasförmige Fluid vor dem Eintritt in die Agglomerationskammer auf eine variable Temperatur von 150 bis 210°C vorgewärmt wird.

12. Verfahren nach einem der Ansprüche 3 bis 11, **dadurch gekennzeichnet, dass** es kontinuierlich ist, da die Phase der Dosierung des Pulvers gleichzeitig mit der Phase der Extraktion der Körnchen ausgeführt wird.

13. Verfahren nach einem der Ansprüche 3 bis 11, **dadurch gekennzeichnet, dass** es nicht kontinuierlich ist, da die Phase der Extraktion der Körnchen im Anschluss an die Phase der Dosierung des Pulvers ausgeführt wird.

## Revendications

1. Mélange pour usage oenologique du type comprenant des particules de poudre de tanin et des particules d'une substance liante agglomérées entre elles, **caractérisé en ce que** ladite substance liante est une poudre de gomme arabique, ledit mélange étant sous forme granules présentant une porosité susceptible d'acheminer à l'intérieur de chaque granule du vin de solution, pour entraîner une dissolution instantanée et complète des granules dans ledit vin de solution, lesdits granules explosant sensiblement en dissolution rapide à l'intérieur dudit vin de solution, assistés par la pression hydrostatique dudit vin.

2. Mélange selon la revendication 1, dans lequel ladite gomme arabique est présente avec un pourcentage en poids compris dans l'intervalle de 20% à 60%, ledit pourcentage étant sélectionné en fonction du type de vin à traiter avec ledit mélange et des traitements oenologiques prévus avec ledit mélange.

3. Procédé de vinification, lequel comprend une étape d'introduction du mélange selon la revendication 1 ou 2, ledit mélange étant obtenu au moyen des étapes consistant à :
- ajouter des quantités dosées des composants dudit mélange sous forme de particules de poudre à l'intérieur d'une chambre d'agglomération ;
- fluidiser lesdites particules de poudres dans ladite chambre d'agglomération ;
- humidifier lesdites particules de poudre fluidisées dans ladite chambre d'agglomération par dispersion particulaire d'un fluide d'agglomération constitué d'une solution aqueuse et de gomme arabique ;
- agglomérer lesdites particules de poudre au moyen dudit fluide d'agglomération avec formation conséquente de granules ;
- dessécher lesdits granules par évaporation dudit fluide d'agglomération dans ladite chambre d'agglomération ;
- extraire lesdits granules desséchés de ladite chambre d'agglomération ;
lesdits granules produisant une dissolution instantanée et complète du tanin et de la gomme arabique dans ledit vin, et explosant sensiblement car ils se dissolvent rapidement à l'intérieur dudit vin, assistés par la pression hydrostatique dudit vin.

4. Procédé selon la revendication 3, **caractérisé en ce que,** dans l'étape de dosage, ladite gomme arabique est dosée avec un pourcentage en poids de 20% à 60%, la fraction résiduelle étant constituée sensiblement par du tanin.

5. Procédé selon l'une quelconque des revendications 3 à 4, **caractérisé en ce qu'**il est réalisé au moyen d'un granulateur à lit fluidisé.

6. Procédé selon l'une quelconque des revendications 3 à 5, **caractérisé en ce que** ladite étape d'agglomération est effectuée durant ladite étape de fluidisation.

7. Procédé selon l'une quelconque des revendications 3 à 6, **caractérisé en ce que** ledit fluide d'agglomération è dispersé sensiblement dans la partie supérieure de la chambre d'agglomération.

8. Procédé selon l'une quelconque des revendications 3 à 7, **caractérisé en ce que** la dessiccation des granules est obtenue par insufflation d'un fluide gazeux et provoque une porosité interne des granules.

9. Procédé selon la revendication 8, **caractérisé en ce que** ledit fluide gazeux est l'air ou l'azote.

10. Procédé selon la revendication 8 ou 9, **caractérisé en ce que** l'insufflation dudit fluide gazeux est effectuée à partir du fond de ladite chambre d'agglomération.

11. Procédé selon l'une quelconque des revendications 8 à 10, **caractérisé en ce qu'**avant de pénétrer dans ladite chambre d'agglomération, le fluide gazeux est préchauffé à une température variable de 150 à 210°C.

12. Procédé selon l'une quelconque des revendications 3 à 11, **caractérisé en ce qu'**il est effectué en continu, l'étape de dosage de ladite poudre étant exécutée simultanément à l'étape d'extraction des granules.

13. Procédé selon l'une quelconque des revendications 3 à 11, **caractérisé en ce qu'**il est effectué de manière discontinue, l'étape d'extraction des granules étant exécutée successivement à l'étape de dosage de ladite poudre.
